# EUROPÄISCHE PATENTSCHRIFT

(11) **EP 2 934 952 B1**
(45) Veröffentlichungstag und Bekanntmachung des Hinweises auf die Patenterteilung: **15.08.2018**
(21) Anmeldenummer: 13817907.2
(22) Anmeldetag: 13.12.2013
(51) Int. Cl.: B60R 16/02, G01C 21/16

(54) **VORRICHTUNG ZUM AUSGEBEN EINES EINE PHYSIKALISCHE MESSGRÖSSE ANZEIGENDEN MESSSIGNALS**
DEVICE FOR OUTPUTTING A MEASUREMENT SIGNAL INDICATING A PHYSICAL MEASUREMENT VARIABLE
DISPOSITIF D'ÉMISSION D'UN SIGNAL DE MESURE INDIQUANT UNE GRANDEUR DE MESURE PHYSIQUE

(30) Priorität: 20.12.2012 DE 102012224103
(43) Veröffentlichungstag der Anmeldung: 28.10.2015
(73) Patentinhaber: Continental Teves AG & Co. OHG, 60488 Frankfurt (DE)
(72) Erfinder: STÄHLIN, Ulrich, 65760 Eschborn (DE); KRETSCHMAR, Sven, 65462 Gustavsburg (DE)
(86) Internationale Anmeldenummer: PCT/EP2013/076500
(87) Internationale Veröffentlichungsnummer: WO 2014/095609

(56) Entgegenhaltungen:
- DE-A1-102004 052 860
- SKOG I ET AL: "In-Car Positioning and Navigation Technologiesâ A Survey", IEEE TRANSACTIONS ON INTELLIGENT TRANSPORTATION SYSTEMS, IEEE, PISCATAWAY, NJ, USA, Bd. 10, Nr. 1, 1. März 2009 (2009-03-01), Seiten 4-21, XP011347156, ISSN: 1524-9050, DOI: 10.1109/TITS.2008.2011712

## Beschreibung

Die Erfindung betrifft in einem Fahrzeug eine Vorrichtung zum Ausgeben eines eine physikalische Messgröße anzeigenden Messsignals und ein Fahrzeug mit der Vorrichtung.

Aus der WO 2011/ 098 333 A1 ist bekannt, in einem Fahrzeug verschiedene Sensorgrößen heranzuziehen, um bereits vorhandene Sensorgrößen basierend auf einer Fusion zu verbessern oder neue Sensorgrößen zu generieren und somit die erfassbare Information zu steigern.

In der wissenschaftlichen Veröffentlichung
SKOG I ET AL: "ln-Car Positioning and Navigation Technologies - A Survey", IEEE TRANSAGTIONS ON INTELLIGENT TRANSPORTATION SYSTEMS, IEEE, PISCATAWAY, NJ, USA,Bd. 10, Nr. 1, 1. März 2009 (2009-03-01), Seiten 4-21, XP011347156, ISSN: 1524-9050, 001: 10.11 09/TITS.2008.2011712
werden unterschiedliche Techniken zur Bestimmung der Eigenposition eines Fahrzeugs diskutiert und offenbart.

Es ist Aufgabe die Nutzung mehrerer Sensorgrößen zur Informationssteigerung zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst eine Vorrichtung zum Ausgeben eines eine physikalische Messgröße in einem Fahrzeug anzeigenden Messsignals einen ersten Prozessor, der eingerichtet ist, basierend auf einem ersten Sensorsignal ein erstes Vergleichssignal für die physikalische Messgröße zu bestimmen, einen zweiten Prozessor, der eingerichtet ist, basierend auf einem zweiten Sensorsignal ein zweites Vergleichssignal für die physikalische Größe zu bestimmen, und eine Filtereinrichtung, die eingerichtet ist, einen Fehler zwischen den beiden Vergleichssignalen zu bestimmen und an den ersten Prozessor auszugeben, wobei der erste Prozessor eingerichtet ist, das Messsignal basierend auf einer Korrektur des ersten Vergleichssignals unter Berücksichtigung des Fehlers zu bestimmen.

Der angegebenen Vorrichtung liegt die Überlegung zugrunde, dass die Ergebnisse aus der eingangs genannten Fusion der Sensorgrößen und damit das gewünschte Messsignal mit einem sehr hohen Sicherheitslevel von beispielsweise ASIL B oder sogar ASIL D aus der ISO-Norm ISO 26262 ausgegeben werden sollten. Ein entsprechender Algorithmus, der einer derartig hohen Anforderung an die Sicherheit an das Messsignal gerecht wird, bringt jedoch unmittelbar einen entsprechend hohen Rechenaufwand mit sich, der eine entsprechend hohe Prozessorleistung erfordert, um die Ausgabe des Messsignals mit dem gewünschten Sicherheitslevel darzustellen.

Demgegenüber wird im Rahmen der angegebenen Vorrichtung jedoch erkannt, dass bereits eine Grundsicherheit in der Ausgabe des Messsignals erreicht werden kann, wenn die der Sensorfusion zugrundeliegenden Vergleichssignale auf getrennten Prozessoren bestimmt werden. In diesem Fall könnte einer der beiden Prozessoren ausfallen, und es wäre immer noch ein Vergleichssignal verfügbar, das hilfsweise als Messsignal mit einer geringeren Güte verwendet werden könnte. Auf diese Weise kann auf eine Verwendung eines oben genannten rechenressourcenintensiven Algorithmus zur Umsetzung des hohen Sicherheitslevels verzichtet werden, da das Sicherheitslevel bereits durch die Verwendung zweier redundanter aber kostengünstiger Prozessoren realisiert werden kann.

Zwar könnten die Sensorsignale und das Messsignal beliebige physikalische Größe, wie Reifendruck, Reifenhalbmesser, und so weiter beschreiben, in einer Weitebildung der angegebenen Vorrichtung ist eines der Sensorsignale jedoch ein globales Satellitennavigationssignal, nachstehend GNSS-Signal genannt, das andere der Sensorsignale ein Fahrdynamiksignal und die physikalische Messgröße ein Ortungssignal, das das Fahrzeug hinsichtlich seiner absoluten Position und seiner Positionsänderung ortet. Fällt beispielsweise das Fahrdynamiksignal für den die Sensorfusion bestimmenden Prozessor aus, so könnten die Fahrdynamikdaten aus dem GNSS-Signal zumindest rudimentär abgeleitet werden, um die Bewegung des Fahrzeuges beispielsweise für eine rudimentäre Fahrdynamikregelung herzuleiten. Ähnlich verhält es sich bei einem Ausfall des Prozessors, der im Rahmen der Sensorfusion das GNSS-Signal bestimmt. Hier könnten beispielsweise durch einen Rückfall auf einen an sich bekannten Loosly-Coupled Ansatz die aus dem GNSS-Signal herleitbaren Ortungsdaten des Fahrzeuges basierend auf den Fahrdynamikdaten interpoliert werden.

In einer anderen Weiterbildung der angegebenen Vorrichtung ist wenigstens ein Prozessor eingerichtet, den entsprechend anderen Prozessor zu überwachen. Auf diese Weise könnte ein fehlerhaft arbeitender Prozessor erkannt und geeignete Gegenmaßnahmen eingeleitet werden, mit denen das Fahrzeug beispielsweise in einen sicherheitsunkritischen Fahrzustand überführt wird. Fallen beispielsweise die Fahrdynamikdaten weg, könnte das Fahrzeug in einen Notbetriebsmodus überführt werden, in dem für das Fahrzeug eine bestimmte Höchstgeschwindigkeit zugelassen wird, bei der selbst mit aus dem GNSS-Signal abgeleiteten Fahrdynamikdaten eine rudimentäre Fahrdynamikregelung möglich sein könnte. Alternativ oder zusätzlich könnte auf einem Navigationsgerät die nächste Werkstatt für das Fahrzeug gesucht und dem Fahrer angezeigt werden.

In einer zusätzlichen Weiterbildung der angegebenen Vorrichtung ist der überwachende Prozessor eingerichtet, ein Residuum zwischen dem Vergleichssignal des überwachten Prozessors und einem Modell für die physikalische Messgröße zu berechnen. Unter einem Residuum soll nachstehen eine Abweichung verstanden werden, die sich ergibt, wenn in das Modell statt idealer Lösungsdaten die Daten aus dem Vergleichssignal eingesetzt werden. Das Residuum ist damit ein Indikator für einen Fehler im Vergleichssignal aus dem überwachten Prozessor, der durch die unabhängige Berechnung auf dem zu überwachenden Prozessor sicher gefunden werden kann.

In einer besonderen Weiterbildung der angegebenen Vorrichtung ist der überwachende Prozessor eingerichtet, den Betrieb des überwachten Prozessors basierend auf einer Gegenüberstellung des berechneten Residuums und einem Sollwert zu überwachen, so dass ein Kriterium festgelegt ist, ab wann auf einen Fehler entschieden werden soll.

In einer bevorzugten Weiterbildung der angegebenen Vorrichtung ist der überwachende Prozessor eingerichtet, sein bestimmtes Vergleichssignal als Messsignal auszugeben, wenn der Betrieb des überwachten Prozessors als fehlerhaft erkannt wird. Auf diese Weise kann der überwachende Prozessor den Ausfall des Messsignals aufgrund der nicht funktionierenden Sensorfusion überbrücken, bis der Ausfall beispielsweise in einer Werkstatt behoben ist.

In einer besonders bevorzugten Weiterbildung der angegebenen Vorrichtung ist der überwachende Prozessor im Fehlerfall des überwachten Prozessors eingerichtet, das Messsignal mit einer Information über den Ausfall des überwachten Prozessors zu versehen. Auf diese Weise können andere Aktoren, Regelkreise oder Steuerungen den Ausfall die schlechtere Datenintegrität des Vergleichssignals des noch fehlerfreien Prozessors, das als Messsignal verwendet wird, erkennen und Ihren Betrieb darauf ausrichten. Eine Fahrdynamikregelung kann sich beispielsweise unter bestimmten Bedingungen oder ganz abschalten, um das Fahrzeug nicht durch eine instabile Regelung in verkehrskritische Situationen zu überführen.

In einer noch anderen Weiterbildung der angegebenen Vorrichtung ist der überwachende Prozessor eingerichtet, sein Vergleichssignal mit dem berechneten Residuum zu verknüpfen und auszugeben. Die Ausgabe kann beispielsweise stetig und unabhängig vom Fehlerfall des überwachten Prozessors erfolgen. Auf diese Weise kann der Empfänger des Vergleichssignals selbst entscheiden, ob er das Vergleichssignal als Messsignal oder das Messsignal aus der Sensorfusion benutzt.

In einer alternativen Weiterbildung der angegebenen Vorrichtung ist der überwachende Prozessor ein Kryptoprozessor, der seine Prozesse in einer Weise ausführt, die von außen beispielsweise durch eine Systemanalyse nicht nachvollziehbar sind. Auf diese Weise ist eine Manipulation des überwachenden Prozessors erschwert. In besonders günstiger Weise sollte als Kryptoprozessor der Prozessor gewählt werden, auf dem kein die Filtereinrichtung ausführender Prozess läuft, und der damit dem geringsten Rechenaufwand unterworfen ist. Der Kryptoprozessor kann damit entsprechend leistungsschwächer gewählt werden, was unter Umständen erst eine Verwendung als Kryptoprozessor ermöglicht. Der Kryptoprozessor könnte vorzugsweise das Vergleichssignal des überwachten Prozessors plausibilisieren und das Plausibilisierungsergebnis im Anschluss direkt selbst versenden, da andere Fahrzeugkomponenten so einen zuverlässigen und vor allem manipulationsfreien Zustandsbericht über den überwachten Prozessor erhalten.

Gemäß einem weiteren Aspekt der Erfindung umfasst ein Fahrzeug eine angegebene Vorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines Fahrzeuges mit einem Fusionssensor, und
Fig. 2 eine Prinzipdarstellung des Fusionssensors aus Fig. 1 zeigt.

In den Figuren werden gleiche technische Elemente mit gleichen Bezugszeichen versehen und nur einmal beschrieben.

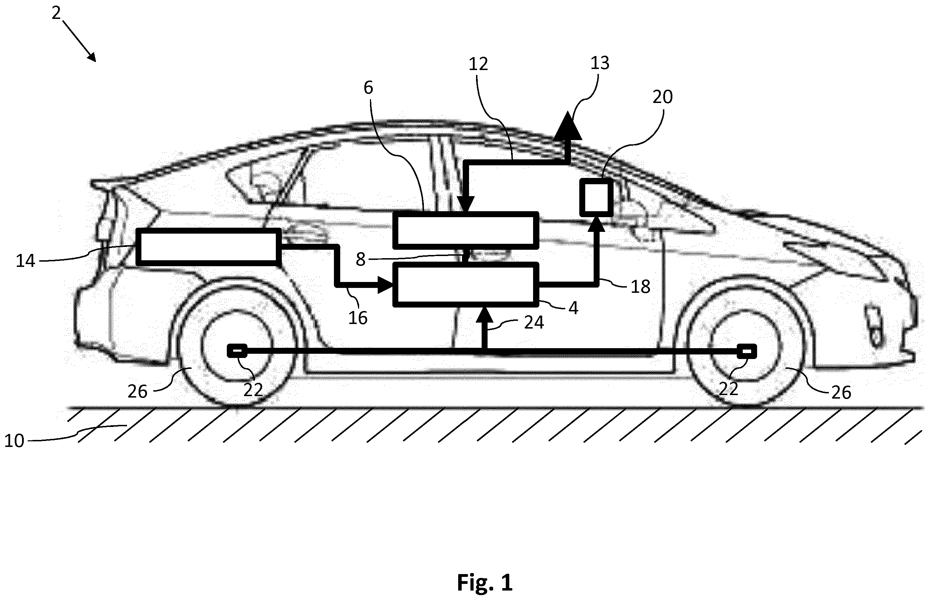

Es wird auf Fig. 1 Bezug genommen, die eine Prinzipdarstellung eines Fahrzeuges 2 mit einem Fusionssensor 4 zeigt.

Der Fusionssensor 4 empfängt in der vorliegenden Ausführungsform über einen an sich bekannten GNSS-Empfänger 6 Lagedaten 8 des Fahrzeuges 2, die eine absolute Position des Fahrzeuges 2 auf einer Fahrbahn 10 umfassen. Neben der absoluten Position umfassend die Lagedaten 8 aus dem GNSS-Empfänger 6 auch eine Geschwindigkeit des Fahrzeuges 2. Die Lagedaten 8 aus dem GNSS-Empfänger 6 werden in der vorliegenden Ausführung in einer dem Fachmann bekannten Weise aus einem GNSS-Signal 12 in dem GNSS-Empfänger 6 abgeleitet, das über eine GNSS-Antenne 13 empfangen wird und daher nachstehend GNSS-Lagedaten 8 genannt. Für Details dazu wird auf die einschlägige Fachliteratur dazu verwiesen.

Der Fusionssensor 4 ist in einer noch zu beschreibenden Weise dazu ausgebildet, den Informationsgehalt der aus dem GNSS-Signal 12 abgeleiteten GNSS-Lagedaten 8 zu steigern. Dies ist einerseits notwendig, da das GNSS-Signal 12 einen sehr niedrigen Signal/Rauschbandabstand aufweisen und so sehr ungenau sein kann. Andererseits ist das GNSS-Signal 12 nicht ständig verfügbar.

In der vorliegenden Ausführung weist das Fahrzeug 2 dazu eine Bewegungsbestimmungseinrichtung 14 auf, die Fahrdynamikdaten 16 des Fahrzeuges 2 erfasst. Darunter fallen bekanntermaßen eine Längsbeschleunigung, eine Querbeschleunigung sowie eine Vertikalbeschleunigung und eine Wankrate, eine Nickrate sowie eine Gierrate des Fahrzeuges 2. Diese Fahrdynamikdaten 16 werden in der vorliegenden Ausführung herangezogen, um den Informationsgehalt der GNSS-Lagedaten 8 zu steigern und beispielsweise die Position und die Geschwindigkeit des Fahrzeuges 2 auf der Fahrbahn 10 zu präzisieren. Die präzisierten Lagedaten 18 können dann von einem Navigationsgerät 20 selbst dann verwendet werden, wenn das GNSS-Signal 12 beispielsweise unter einem Tunnel überhaupt nicht verfügbar ist.

Zur weiteren Steigerung des Informationsgehaltes der GNSS-Lagedaten 8 können in der vorliegenden Ausführung optional noch Raddrehzahlsensoren 22 verwendet werden, die die Raddrehzahlen 24 der einzelnen Räder 26 des Fahrzeuges 2 erfassen.

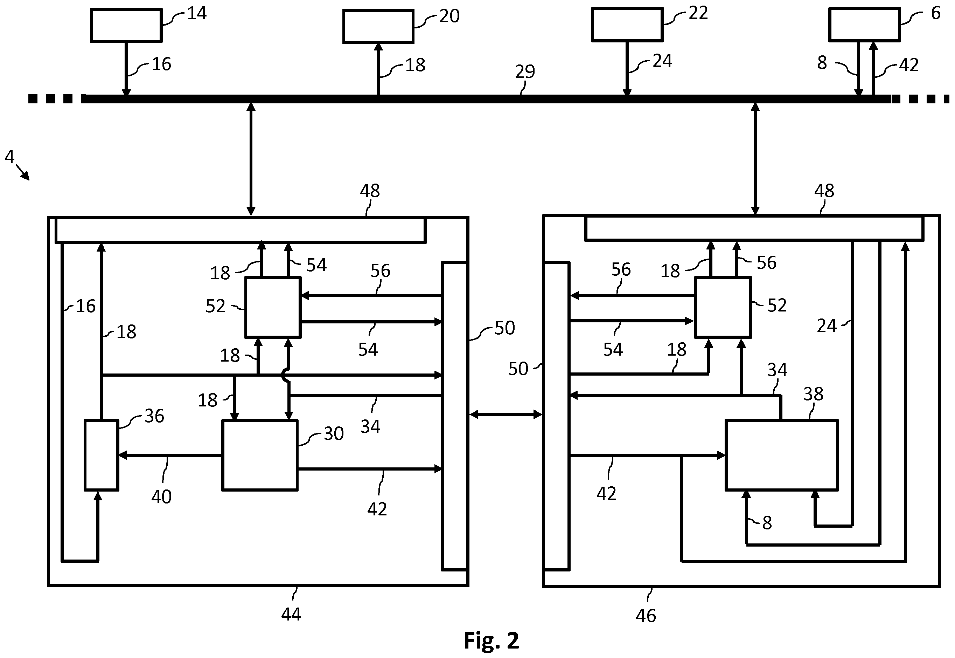

Es wird auf Fig. 2 Bezug genommen, die eine Prinzipdarstellung Fusionssensors 4 aus Fig. 1 zeigt.

Der Fusionssensor 4 weist in der vorliegenden Ausführung eine besondere Struktur auf, auf die an späterer Stelle näher eingegangen wird.

In den Fusionssensor 4 gehen die in Fig. 1 bereits erwähnten Messdaten ein, die über einen Datenbus 29 zwischen den Sensoren 6, 14, 22, dem Fusionssensor 4 und dem Navigationsgerät 20 ausgetauscht werden. Der Datenbus 29 kann beispielsweise als Controller Area Network-Bus, CAN-Bus genannt aufgebaut sein. Eine detaillierte Erläuterung der an der Datenübertragung beteiligten Elemente innerhalb des Fusionssensors 4, wie beispielsweise Schnittstellen und so weiter, wird an späterer Stelle näher eingegangen.

Der Fusionssensor 4 soll die präzisierten Lagedaten 18 ausgeben. Grundgedanke dazu ist es, die Information aus den GNSS-Lagedaten 8 den Fahrdynamikdaten 16 aus dem Bewegungsbestimmungseinrichtung 14 in ein Filter 30 gegenüberzustellen und so einen Signal/Rauschbandabstand in den Lagedaten 8 des GNSS-Empfängers 6 oder den Fahrdynamikdaten 16 aus dem Bewegungsbestimmungseinrichtung 14 zu erhöhen. Dazu kann das Filter zwar beliebig ausgebildet, ein Kalman-Filter löst diese Aufgabe am wirkungsvollsten mit einem vergleichsweise geringen Rechenressourcenanspruch. Daher soll das Filter 30 nachstehend vorzugsweise ein Kalman-Filter 30 sein.

In das Kalman-Filter 30 gehen die präzisierten Lagedaten 18 des Fahrzeuges 2 und Vergleichslagedaten 34 des Fahrzeuges 2 ein. Die präzisierten Lagedaten 18 werden in der vorliegenden Ausführung in einem beispielsweise aus der DE 10 2006 029 148 A1 bekannten Strapdown-Algorithmus 36 aus den Fahrdynamikdaten 16 generiert. Sie enthalten präzisierten Positionsinformationen über das Fahrzeug 2, aber auch andere Lagedaten über das Fahrzeug 2, wie beispielsweise seine Geschwindigkeit, seine Beschleunigung und sein Heading. Demgegenüber werden die Vergleichslagedaten 34 aus einem Modell 38 des Fahrzeuges 2 gewonnen, das zunächst einmal aus dem GNSS-Empfänger 6 mit den GNSS-Lagedaten 8 gespeist wird. Aus diesen GNSS-Lagedaten 8 werden dann in dem Modell 38 die Vergleichslagedaten 34 bestimmt, die die gleichen Informationen enthalten, wie die präzisierten Lagedaten 18. Die präzisierten Lagedaten 18 und die Vergleichslagedaten 34 unterscheiden sich lediglich in ihren Werten.

Das Kalman-Filter 30 berechnet basierend auf den präzisierten Lagedaten 18 und den Vergleichslagedaten 34 einen Fehlerhaushalt 40 für die präzisierten Lagedaten 18 und einen Fehlerhaushalt 42 für die Vergleichslagedaten 34. Unter einem Fehlerhaushalt soll nachstehend ein Gesamtfehler in einem Signal verstanden werden, der sich aus verschiedenen Einzelfehlern bei der Erfassung und Übertragung des Signals zusammensetzt. Bei dem GNSS-Signal 12 und damit bei den GNSS-Lagedaten 8 kann sich ein entsprechender Fehlerhaushalt aus Fehlern der Satellitenbahn, der Satellitenuhr, der restlichen Refraktionseffekte und aus Fehlern im GNSS-Empfänger 6 zusammensetzen, die beispielsweise durch Rückführen des Fehlerhaushaltes 42 in den GPS-Empfänger 6 durch diesen korrigiert werden können.

Der Fehlerhaushalt 40 der präzisierten Lagedaten 18 und der Fehlerhaushalt 42 der Vergleichslagedaten 34 werden dann entsprechend dem Strapdown-Algorithmus 36 und dem Modell 38 zur Korrektur der präzisierten Lagedaten 18 beziehungsweise der Vergleichslagedaten 34 zugeführt. Das heißt, dass die präzisierten Lagedaten 18 und die Vergleichslagedaten 34 iterativ um ihre Fehler bereinigt werden.

In der vorliegenden Ausführung sollen der Strapdown-Algorithmus 36 sowie das Kalman-Filter 30 auf einem ersten Prozessor 44 in Form eines Algorithmus ausgeführt werden, der zu einem zweiten Prozessor 46, auf dem das Modell 38 berechnet wird, eine getrennte Recheneinheit darstellt. Fällt beispielsweise der zweite Prozessor 46 aus, werden die präzisierten Lagedaten 18 weiterhin ausgegeben, obgleich diese Art der präzisierten Lagedaten 18 aufgrund der fehlenden Vergleichslagedaten 34 einer größeren Lagetoleranz unterworfen ist.

In einer der Übersichtlichkeit halber nicht weiter dargestellten Weise könnte auch der zweite Prozessor 46 im Falle eines Ausfalls des ersten Prozessors 44 die Vergleichslagedaten 34 als präzisierte Lagedaten 18 ausgeben, um in einem derartigen Fehlerfall zumindest die grundlegende Funktionalität des Fusionssensors 4 mit der zuvor erwähnten größeren Lagetoleranz in den präzisierten Lagedaten 18 fortzuführen.

Zum Austausch der oben genannten Messdaten 8, 16, 18, 22 zwischen den Sensoren 6, 14, 22, dem Fusionssensor 4 und dem Navigationsgerät 20 über den Bus 29 weisen die beiden Prozessoren 44, 46 je eine Busschnittstelle 48 auf, über die diese Messdaten 8, 16, 18, 22 ausgetauscht werden können. Zum Austausch der präzisierten Lagedaten 18, der Vergleichslagedaten 34 sowie des Fehlerhaushalts 42 untereinander weisen die beiden Prozessoren 44, 46 in der vorliegenden Ausführung je eine Direktschnittstelle 50 auf. Alternativ könnten diese Daten jedoch ebenfalls über den Bus 29 mit einer entsprechend höheren Übertragungslatenz übertragen werden.

In der vorliegenden Ausführung sollen sich die beiden Prozessoren 44, 46 gegenseitig hinsichtlich ihres fehlerfreien Betriebszustands überwachen. Dazu wird in jedem Prozessor 44, 46 in der vorliegenden Ausführung ein Plausibilisierungsalgorithmus 52 ausgeführt.

Jeder Plausibilisierungsalgorithmus 52 könnte beispielsweise die präzisierten Lagedaten 18 basierend auf den Vergleichslagedaten 34 durch eine Gegenüberstellung plausibilisieren, wobei im Fehlerfall hier nicht klar wäre, ob die präzisierten Lagedaten 18 oder die Vergleichslagedaten 34 fehlerhaft sind und damit entsprechend der erste Prozessor 44 oder der zweite Prozessor 46 einem Fehlbetrieb unterliegt.

Daher wird im Rahmen der vorliegenden Ausführung vorgeschlagen, dass jeder Plausibilisierungsalgorithmus 52 basierend auf einem nicht weiter dargestellten Vergleichsmodell durch Einsetzen der präzisierten Lagedaten 18 und/oder der Vergleichslagedaten 34 in das Vergleichsmodell Residuen berechnet. Der erste Prozessor 44 könnte beispielsweise basierend auf den Vergleichslagedaten 34 Vergleichsresiduen 54 berechnen, während der zweite Prozessor 46 basierend auf präzisierten Lagedaten 18 Hauptresiduen 56 berechnet. Beide Prozessoren 44, 46 könnten diese Residuen 54, 56 zum Vergleich untereinander austauschen.

Ein Prozessor 44, 46 allein oder beide Prozessoren 44, 46 können alternativ oder zusätzlich auch stetig die entsprechend basierend auf den Lagedaten 18, 34 des anderen Prozessors 46, 44 berechneten Residuen 54, 56 zusammen mit ihren eigenen Lagedaten 18, 34 in den Bus 29 einspeisen, damit die Empfänger der präzisierten Lagedaten 18, wie beispielsweise das Navigationsgerät 20 selbstständig basierend auf den Residuen 54, 56 entscheiden können, welche der Lagedaten 18, 34 sie für Ihren eigenen Betrieb verwenden.

In besonders günstiger Weise kann der Plausibilisierungsalgorithmus 52 in wenigstens einer der beiden Prozessoren 44, 46 im Rahmen eines an sich bekannten Kryptoprozesses ausgeführt werden, um beispielsweise die Verschleierung leistungssteigernder Manipulationen am Fahrzeug 2 über Manipulationen am Plausibilisierungsalgorithmus 52 zu verhindern.

## Patentansprüche

1. Vorrichtung (4) zum Ausgeben eines eine physikalische Messgröße in einem Fahrzeug (2) anzeigenden Messsignals (18), umfassend:
- einen ersten Prozessor (44), der eingerichtet ist, basierend auf einem ersten Sensorsignal (16) ein erstes Vergleichssignal (18) für die physikalische Messgröße zu bestimmen,
- einen zweiten Prozessor (46), der eingerichtet ist, basierend auf einem zweiten Sensorsignal (8) ein zweites Vergleichssignal (34) für die physikalische Messgröße zu bestimmen, und
- eine Filtereinrichtung (30), die eingerichtet ist, einen Fehler (40) zwischen den beiden Vergleichssignalen (18, 34) zu bestimmen und an den ersten Prozessor (44) auszugeben,
- wobei der erste Prozessor (44) eingerichtet ist, das Messsignal (18) basierend auf einer Korrektur des ersten Vergleichssignals (18) mit dem Fehler (40) zu bestimmen, wobei eines der Sensorsignale (8) ein globales Satellitennavigationssignal, das andere der Sensorsignale (16) ein Fahrdynamiksignal und die physikalische Messgröße (18) ein Ortungssignal ist, das das Fahrzeug (2) hinsichtlich seiner absoluten Position und seiner Positionsänderung ortet, **dadurch gekennzeichnet, dass**
die Vergleichssignale auf getrennten Prozessoren bestimmt werden.

2. Vorrichtung (4) nach Anspruch 1, wobei wenigstens ein Prozessor (44, 46) eingerichtet ist, den entsprechend anderen Prozessor (46, 44) zu überwachen.

3. Vorrichtung (4) nach Anspruch 2, wobei der überwachende Prozessor (44, 46) eingerichtet ist, ein Residuum (56, 54) zwischen dem Vergleichssignal (34, 18) des überwachten Prozessors (46, 44) und einem Modell für die physikalische Messgröße (18) zu berechnen.

4. Vorrichtung (4) nach Anspruch 3, wobei der überwachende Prozessor (44, 46) eingerichtet ist, den Betrieb des überwachten Prozessors (46, 44) basierend auf einer Gegenüberstellung des berechneten Residuums (56, 54) und einem Sollwert zu überwachen.

5. Vorrichtung (4) nach Anspruch 4, wobei der überwachende Prozessor (44, 46) eingerichtet ist, sein bestimmtes Vergleichssignal (34, 18) als Messsignal (18) auszugeben, wenn der Betrieb des überwachten Prozessors (46, 44) als fehlerhaft erkannt wird.

6. Vorrichtung (4) nach Anspruch 5, wobei der überwachende Prozessor (44, 46) im Fehlerfall des überwachten Prozessors (46, 44) eingerichtet ist, das Messsignal (18) mit einer Information (56, 54) über den Ausfall des überwachten Prozessors (46, 44) zu versehen.

7. Vorrichtung (4) nach einem der vorstehenden Ansprüche 3 bis 6, wobei der überwachende Prozessor (44, 46) eingerichtet ist, sein Vergleichssignal (34, 18) mit dem berechneten Residuum (56, 54) zu verknüpfen und auszugeben.

8. Vorrichtung (4) nach einem der vorstehenden Ansprüche 2 bis 7, wobei der überwachende Prozessor (44, 46) ein Kryptoprozessor ist.

9. Fahrzeug (2) umfassend eine Vorrichtung (44) nach einem der vorstehenden Ansprüche.

## Claims

1. Apparatus (4) for outputting a measurement signal (18) that indicates a physical measured variable in a vehicle (2), comprising:
- a first processor (44) that is set up to take a first sensor signal (16) as a basis for determining a first comparison signal (18) for the physical measured variable,
- a second processor (46) that is set up to take a second sensor signal (8) as a basis for determining a second comparison signal (34) for the physical measured variable, and
- a filter device (30) that is set up to determine an error (40) between the two comparison signals (18, 34) and to output said error to the first processor (44),
- wherein the first processor (44) is set up to determine the measurement signal (18) on the basis of a correction of the first comparison signal (18) with the error (40),
wherein one of the sensor signals (8) is a global satellite navigation signal, the other of the sensor signals (16) is a driving dynamics signal and the physical measured variable (18) is a locating signal that locates the vehicle (2) in terms of its absolute position and its change of position,
**characterized in that**
the comparison signals are determined on separate processors.

2. Apparatus (4) according to Claim 1, wherein at least one processor (44, 46) is set up to monitor the accordingly other processor (46, 44).

3. Apparatus (4) according to Claim 2, wherein the monitoring processor (44, 46) is set up to compute a residual (56, 54) between the comparison signal (34, 18) from the monitored processor (46, 44) and a model for the physical measured variable (18).

4. Apparatus (4) according to Claim 3, wherein the monitoring processor (44, 46) is set up to monitor the operation of the monitored processor (46, 44) on the basis of contrasting of the computed residual (56, 54) and a setpoint value.

5. Apparatus (4) according to Claim 4, wherein the monitoring processor (44, 46) is set up to output its determined comparison signal (34, 18) as a measurement signal (18) when the operation of the monitored processor (46, 44) is identified as erroneous.

6. Apparatus (4) according to Claim 5, wherein in the event of error in the monitored processor (46, 44) the monitoring processor (44, 46) is set up to provide the measurement signal (18) with a piece of information (56, 54) about the failure of the monitored processor (46, 44) .

7. Apparatus (4) according to one of the preceding Claims 3 to 6, wherein the monitoring processor (44, 46) is set up to logically combine, and output, its comparison signal (34, 18) with the computed residual (56, 54).

8. Apparatus (4) according to one of the preceding Claims 2 to 7, wherein the monitoring processor (44, 46) is a cryptoprocessor.

9. Vehicle (2) comprising an apparatus (44) according to one of the preceding claims.

## Revendications

1. Dispositif (4) destiné à délivrer un signal de mesure (18) indiquant une grandeur physique de mesure dans un véhicule (2), comprenant :
- un premier processeur (44) adapté pour déterminer, sur la base d'un premier signal de capteur (16), un premier signal de comparaison (18) pour la grandeur physique de mesure,
- un second processeur (46) adapté pour déterminer, sur la base d'un second signal de capteur (8), un second signal de comparaison (34) pour la grandeur physique de mesure, et
- un moyen de filtrage (30) adapté pour déterminer une erreur (40) entre les deux signaux de comparaison (18, 34) et la transmettre au premier processeur (44),
- dans lequel le premier processeur (44) est adapté pour déterminer le signal de mesure (18) sur la base d'une correction du premier signal de comparaison (18) contenant l'erreur (40), dans lequel l'un des signaux de capteur (8) est un signal de navigation par satellite global, l'autre des signaux de capteur (16) est un signal de dynamique de conduite et la grandeur physique de mesure (18) est un signal de localisation qui localise le véhicule (2) en ce qui concerne sa position absolue et son changement de position,
**caractérisé en ce que** les signaux de comparaison sont déterminés sur des processeurs séparés.

2. Dispositif (4) selon la revendication 1, dans lequel au moins un processeur (44, 46) est adapté pour surveiller l'autre processeur correspondant (46, 44).

3. Dispositif (4) selon la revendication 2, dans lequel le processeur de surveillance (44, 46) est adapté pour calculer un résidu (56, 54) entre le signal de comparaison (34, 18) du processeur surveillé (46, 44) et un modèle de la grandeur physique de mesure (18).

4. Dispositif (4) selon la revendication 3, dans lequel le processeur de surveillance (44, 46) est adapté pour surveiller le fonctionnement du processeur surveillé (46, 44) sur la base d'une comparaison entre le résidu calculé (56, 54) et une valeur théorique.

5. Dispositif (4) selon la revendication 4, dans lequel le processeur de surveillance (44, 46) est adapté pour délivrer son signal de comparaison spécifique (34, 18) en tant que signal de mesure (18) lorsqu'il est détecté que le fonctionnement du processeur surveillé (46, 44) est défectueux.

6. Dispositif (4) selon la revendication 5, dans lequel le processeur de surveillance (44, 46) est adapté, en cas de défaillance du processeur surveillé (46, 44), pour fournir un signal de mesure (18) contenant une information (56, 54) concernant la défaillance du processeur surveillé (46, 44).

7. Dispositif (4) selon l'une des revendications 3 à 6 précédentes, dans lequel le processeur de surveillance (44, 46) est adapté pour combiner son signal de comparaison (34, 18) avec le résidu calculé (56, 54) et pour le délivrer.

8. Dispositif (4) selon l'une des revendications 2 à 7 précédentes, dans lequel le processeur de surveillance (44, 46) est un processeur de cryptage.

9. Véhicule (2) comprenant un dispositif (44) selon l'une des revendications précédentes.
